# EUROPÄISCHE PATENTSCHRIFT

(11) **EP 0 538 756 B1**
(45) Veröffentlichungstag und Bekanntmachung des Hinweises auf die Patenterteilung: **30.11.1994**
(21) Anmeldenummer: 92117777.0
(22) Anmeldetag: 17.10.1992
(51) Int. Cl.: B01J 3/04, B01J 3/00

(54) **Autoklav**
Autoclave
Autoclave

(30) Priorität: 24.10.1991 DE 4135118
(43) Veröffentlichungstag der Anmeldung: 28.04.1993
(73) Patentinhaber: Hebel Aktiengesellschaft, D-82243 Fürstenfeldbruck (DE); SICOWA Verfahrenstechnik für Baustoffe GmbH & Co. KG, D-52072 Aachen (DE)
(72) Erfinder: Wosnitza, Franz, Prof. Dr.-Ing., W-5100 Aachen (DE); Beckmann, Georg, Dipl.-Ing. Dr., A-1030 Wien (AT); Zimmermann, Georg, Dipl.-Phys., W-5100 Aachen (DE)
(74) Vertreter: Sparing Röhl Henseler Patentanwälte

(56) Entgegenhaltungen:
- EP-A- 0 133 239
- EP-A- 0 333 389
- CH-A- 227 794

## Beschreibung

Die Erfindung betrifft einen Autoklaven zur Druckdampfbehandlung von Beschickungsgut mit einem von einem Autoklavmantel umschlossenen, im wesentlichen zylindrischen Innenraum und mit einer von einem beheizten Wärmeträgermedium beaufschlagbaren, zur Erzeugung von Dampf (Sattdampf oder vorzugsweise Heißdampf) im Innenraum dienenden Heizeinrichtung, die in einem seitlichen Krümmungsbereich des Autoklavmantels angeordnet ist und einen wärmeträgermediumdurchflossenen Wärmetauscher umfaßt.

Ein derartiger Autoklav ist aus der CH-A-227 794 bekannt, bei dem im seitlichen Krümmungsbereichen jeweils Wärmetauscher vorgesehen sind, die aus einer Kammer mit darin angeordneten Heizrohren gebildet werden. Mittels Ventilatoren, die unter der Decke des Autoklaven angeordnet und über außerhalb des Autoklaven angeordnete Motoren antreibbar sind, wird ein Zwangsumlauf durch die Kammern nach unten zum Boden des Autoklaven bewirkt.

Aus der EP-B-0 133 239 ist ein Autoklav bekannt, bei dem der Autoklavmantel doppelwandig ausgebildet ist, um entweder direkt von einem beheizten Wärmeträgermedium wie Thermoöl durchströmt zu werden, oder Heizschlangen aufzunehmen, die von dem Wärmeträgermedium durchströmt werden. Eine derartige Autoklavbeheizung ist konstruktiv und energieaufwendig sowie träge.

Aufgabe der vorliegenden Erfindung ist es, einen Autoklaven der eingangs genannten Art zu schaffen, dessen Beheizung konstruktiv vereinfacht, energetisch günstig und leicht steuerbar ist.

Diese Aufgabe wird dadurch gelöst, daß die Heizeinrichtung wenigstens einen im Autoklaven im wesentlichen vertikal angeordneten Kamin, in dessen unterem Bereich der Wärmetauscher angeordnet ist, umfaßt, so daß sich eine im wesentlichen in Umfangsrichtung des Autoklavmantels umlaufende freie Konvektionsströmung ergibt.

Weitere Ausgestaltungen der Erfindung sind der nachfolgenden Beschreibung und den Unteransprüchen zu entnehmen.

Die Erfindung wird nachstehend anhand eines im Radialschnitt ausschnittweise dargestellten Autoklaven näher erläutert.

Der dargestellte Autoklav umfaßt einen Autoklavmantel 1, der einen im wesentlichen zylindrischen Innenraum 2 umschließt, an einer Seite mit einer durch einen Deckel verschließbaren Beschickungsöffnung versehen ist und außen eine Wärmeisolierung trägt, um Wärmeverluste nach außen möglichst gering zu halten.

Bodenseitig befinden sich bei dem dargestellten Ausführungsbeispiel des Autoklaven am Autoklavmantel 1 angebrachte Schienen 4, um den Autoklaven mit Wagen 5 beschicken zu können, die Beschickungsgut 6, z.B. dampfzuhärtende Formkörper aus bindemittelhaltigen Baustoffen, auf Paletten 7 tragen, die auf den Wagen 5 gestapelt sind.

In einem der seitlichen Krümmungsbereiche des Autoklavmantels 1, die ohnehin nicht von dem Beschickungsgut eingenommen werden, ist eine Heizeinrichtung 8 angeordnet, die von einer Konsole 9 getragen wird. Die Heizeinrichtung 8 besteht wenigstens aus einem im wesentlichen vertikal angeordneten Kamin 10, der sich vorzugsweise mindestens über die halbe Höhe des Autoklavmantels 1 erstreckt und in etwa an die Krümmung des letzteren angepaßt ist, und einem Wärmetauscher 11, der im unteren Zuströmbereich des Kamins 10 angeordnet und mit einem Vorlauf 12 und einem Rücklauf 13 für Thermoöl verbunden ist, das außerhalb des Autoklaven mittels eines Thermoölerhitzers erhitzbar ist. Dementsprechend wird infolge der freien Konvektion beim Betrieb des Wärmetauschers 11 über den Kamin 10 eine in Umfangsrichtung des Autoklavmantels 1 umlaufende Strömung erzeugt, mit der Sattdampf oder vorzugsweise Heißdampf zum Aufheizen des Beschickungsguts 6 und eine Drucksteigerung erzeugt werden können.

Die obere Austrittsöffnung des Kamins 10 ist vorzugsweise düsenartig verengt.

Wenn die Heizeinrichtung 8 aus mehreren Kaminen 10 mit darin angeordneten Wärmetauschern 11 besteht, können diese jeweils mit Abstand zueinander, zweckmäßigerweise aber auf beiden Seite des Autoklaven angeordnet sein, damit sich eine im mittleren Bereich des Autoklaven abwärts gerichtete Strömung ergibt.

Eine derartige Heizeinrichtung 8 ist konstruktiv einfach, gibt die Wärme direkt und damit energetisch günstig im Autoklaven ab und die Trägheit ist gering, da sich eine Änderung der Thermoöltemperatur direkt im Autoklaven und nicht erst über die zur Innendruckaufnahme entsprechend kräftige Autoklavwandung 1 auswirkt.

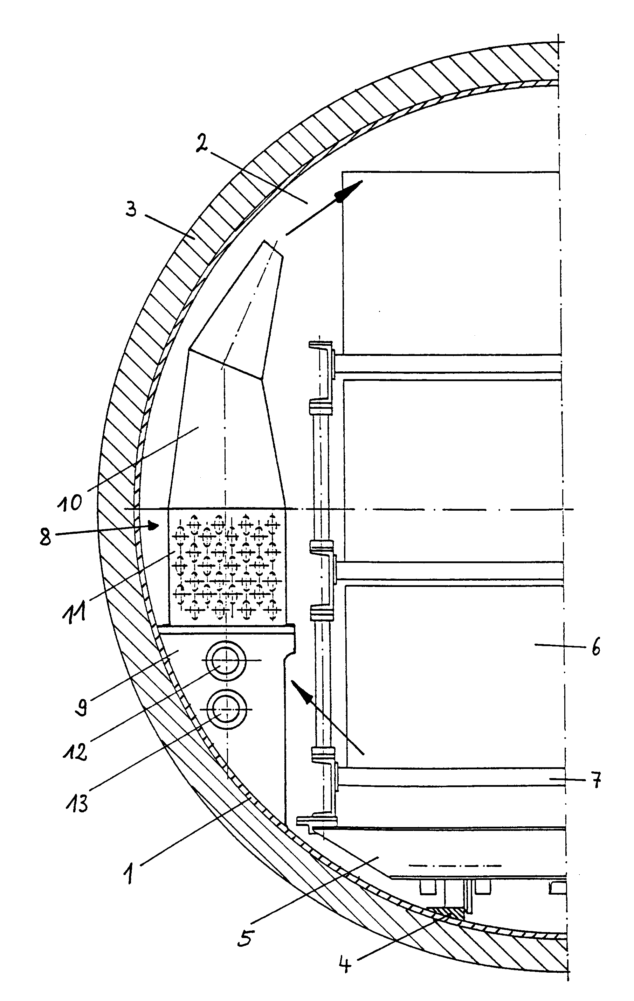

## Patentansprüche

1. Autoklav zur Druckdampfbehandlung von Beschickungsgut (6) mit einem von einem Autoklavmantel (1) umschlossenen, im wesentlichen zylindrischen Innenraum (2) und mit einer von einem beheizten Wärmeträgermedium beaufschlagbaren, zur Erzeugung von Dampf, d.h. Sattdampf oder vorzugsweise Heißdampf, im Innenraum (2) dienenden Heizeinrichtung (8), die in einem seitlichen Krümmungsbereich des Autoklavmantels (1) angeordnet ist und einen wärmeträgermediumdurchflossenen Wärmetauscher (11) umfaßt, dadurch **gekennzeichnet**, daß die Heizeinrichtung (8) wenigstens einen im Autoklaven im wesentlichen vertikal angeordneten Kamin (10), in dessen unterem Bereich der Wärmetauscher (11) angeordnet ist, umfaßt, so daß sich eine im wesentlichen in Umfangsrichtung des Autoklavmantels (1) umlaufende freie Konvektionsströmung ergibt.

2. Autoklav nach Anspruch 1, dadurch gekennzeichnet, daß der Kamin (10) der Krümmung des Autoklavmantels (1) in etwa angepaßt ist.

3. Autoklav nach Anspruch 1 oder 2, dadurch gekennzeichnet, daß der Kamin (10) und der Wärmetauscher (11) auf einer mit dem Autoklavmantel (1) verbundenen Konsole (9) angebracht ist.

4. Autoklav nach einem der Ansprüche 1 bis 3, dadurch gekennzeichnet, daß der Kamin (10) austrittsseitig düsenartig verengt ist.

## Claims

1. Autoclave for the pressurized steam treatment of charge material (6), having an essentially cylindrical interior (2) enclosed by an autoclave casing (1) and having a heating device (8), which can be acted upon by a heated heat-carrier medium and serves for the generation of steam, i.e. saturated steam or, preferably, superheated steam, in the interior (2) and which is disposed in a lateral region of curvature of the autoclave casing (1) and comprises a heat exchanger (11) flowed through by the heat-carrier medium, characterized in that the heating device (8) comprises at least one flue (10) which is disposed essentially vertically in the autoclave and in whose lower region the heat exchanger (11) is disposed, so that a free convection flow, circulating essentially in the peripheral direction of the autoclave casing (1), is produced

2. Autoclave according to Claim 1, characterized in that the flue (10) is matched approximately to the curvature of the autoclave casing (1).

3. Autoclave according to Claim 1 or 2, characterized in that the flue (10) and the heat exchanger (11) are fitted on a bracket (9) connected to the autoclave casing (1).

4. Autoclave according to one of Claims 1 to 3, characterized in that the flue (10) is constricted on the discharge side in the style of a nozzle.

## Revendications

1. Autoclave pour le traitement par de la vapeur sous pression de matériaux chargés (6), comprenant une chambre intérieure (2) sensiblement cylindrique entourée d'une chemise d'autoclave (1) et un dispositif de chauffage (8) fonctionnant dans la chambre intérieure (2), susceptible d'admettre un agent caloporteur à chauffer pour la production de vapeur, c'est à dire de la vapeur saturée ou de préférence de la vapeur surchauffée, le dispositif de chauffage étant disposé dans une zone courbe latérale de la chemise d'autoclave (1) et comportant un échangeur de chaleur (11) parcouru par l'agent caloporteur, caractérisé en ce que le dispositif de chauffage (8) comporte au moins une cheminée (10), disposée sensiblement verticalement dans l'autoclave, dans la partie inférieure de laquelle est disposé l'échangeur de chaleur (11), de telle sorte qu'il se produise un courant de convection circulant librement essentiellement à la périphérie de la chemise d'autoclave (1).

2. Autoclave selon la revendication 1, caractérisée en ce que la cheminée (10) est sensiblement conformée à la courbure de la chemise d'autoclave (1).

3. Autoclave selon la revendication 1 ou 2, caractérisé en ce que la cheminée (10) et l'échangeur de chaleur (11) sont montés sur une console (9) fixée sur la chemise d'autoclave (1).

4. Autoclave selon l'une quelconque des revendications 1 à 3, caractérisé en ce que la cheminée (10) est rétrécie, au niveau de la sortie, à la manière d'une buse.
